# EUROPEAN PATENT SPECIFICATION

(11) **EP 2 418 621 B1**
(45) Date of publication and mention of the grant of the patent: **01.01.2014**
(21) Application number: 11176236.5
(22) Date of filing: 02.08.2011
(51) Int. Cl.: G06T 7/00, G06T 19/00

(54) **Apparatus and method for providing augmented reality information**
Vorrichtung und Verfahren zur Bereitstellung von erweiterter Realitätsinformation
Appareil et procédé pour fournir des informations de réalité améliorées

(30) Priority: 13.08.2010 KR 20100078461
(43) Date of publication of application: 15.02.2012
(73) Proprietor: Pantech Co., Ltd., Seoul 121-270 (KR)
(72) Inventor: Choi, Jung-Hak, 121-270 Seoul (KR)
(74) Representative: Jordan, Volker Otto Wilhelm

(56) References cited:
- WO-A1-2010/075455
- US-A1- 2006 195 858
- US-A1- 2009 128 449
- US-A1- 2009 293 012
- KAMEDA Y ET AL: "Outdoor See-Through Vision Utilizing Surveillance Cameras", MIXED AND AUGMENTED REALITY, 2004. ISMAR 2004. THIRD IEEE AND ACM INTE RNATIONAL SYMPOSIUM ON ARLINGTON, VA, USA 02-05 NOV. 2004, PISCATAWAY, NJ, USA,IEEE, 2 November 2004 (2004-11-02), pages 151-160, XP010769694, DOI: 10.1109/ISMAR.2004.45 ISBN: 978-0-7695-2191-6
- AVERY B ET AL: "Visualizing Occluded Physical Objects in Unfamiliar Outdoor Augmented Reality Environments", MIXED AND AUGMENTED REALITY, 2007. ISMAR 2007. 6TH IEEE AND ACM INTERNATIONAL SYMPOSIUM ON, IEEE, PISCATAWAY, NJ, USA, 13 November 2007 (2007-11-13), pages 285-286, XP031269918, ISBN: 978-1-4244-1749-0

## Description

### BACKGROUND

Field

The following description relates to an apparatus and method for providing augmented reality information.

Description of the Background

Augmented reality (AR) refers to a computer graphic technique that combines virtual objects or information with an image of a real-world environment to display the virtual elements as if they were present in the real environment.

Unlike a general virtual reality technology, which provides only virtual objects in a virtual space, AR technology provides a view of reality that is blended with virtual objects, thereby providing supplementary information which is difficult to obtain in reality. In addition, the general virtual reality technology is applicable to a limited range of fields such as, game technology, whereas due to the above characteristics, AR can be applied to various fields and hence has increasingly gained attention as a future display technology suitable to a ubiquitous environment.

For example, if a tourist traveling in London views a street in a certain direction through a camera built in a mobile phone having various features, such as global positioning system (GPS), the mobile phone may display augmented reality (AR) information about the surrounding environment and objects, such as restaurants and stores having sales, along the street as an information overlay on an image of a real street captured by the camera.

In this case, since the mobile phone only provides AR information about the objects included in an image obtained by the camera, if objects that the tourist is interested in viewing are positioned behind other objects in the image, it is difficult for the tourist to obtain AR information of the concealed objects.

A device and a method for providing augmented reality information about objects that are invisible to the humans is known from the US 2009/293012 A1. The handheld device allows to display on a display unit information about objects concealed from view by a reference object in the line of sight of a user of the device. The reference object is set as the first optically or acoustically opaque object along the line of sight.

An AR-engine is disclosed by US 2009/128449 A1, which creates a model of a region of the user's environment in the direction of the user's field of vision. Based on this model it is then determined that an object within the user's field of vision is invisible to the user. A representation of this concealed object is displayed on a transparent display, which can be a pair of AR glasses or a windshield of an automotive, in front of the user.

A representation of spatial query regions and a method for determining a direction from two positions of objects is known for example from WO 2010/075455 A1 and US 2006/195858 A1.

It is an object of the present invention to provide a mobile device and a method for providing AR information about objects that are behind other objects in an image acquired by a camera, that allows for an accurate selection of reference objects from the displayed objects.

### SUMMARY

Exemplary embodiments of the present invention provide an apparatus and method for providing augmented reality (AR) information of a concealed object which is behind another object.

Additional features of the invention will be set forth in the description which follows, and in part will be apparent from the description, or may be learned by practice of the invention.

An exemplary embodiment provides a method for providing augmented information (AR) of concealed objects according to claim 1.

An exemplary embodiment provides a terminal to provide augmented reality (AR) information of concealed objects, according to claim 9.

An exemplary embodiment provides a communication system according to claim 13.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a communication system to provide augmented reality (AR) information according to an exemplary embodiment.

FIG. 2 is a diagram illustrating an apparatus to provide AR information according to an exemplary embodiment.

FIG. 3 is a diagram illustrating a server to provide AR information according to an exemplary embodiment.

FIG. 4 is a flowchart for a method of providing AR information according to an exemplary embodiment.

FIG. 5 is a diagram illustrating a focal point setting screen according to an exemplary embodiment.

FIG. 6 is a diagram illustrating a focal point setting screen according to an exemplary embodiment.

FIG. 7 is a diagram illustrating a user interface to provide concealed object information according to an exemplary embodiment.

FIG. 8 is a diagram illustrating a user interface to provide concealed object information according to an exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art.

Hereinafter, "object" refers to a real object, a real person, and/or a marker or sign, which may be present in a real-world environment. In addition, "visible object" refers to an object that can be recognized from an image captured from a real environment, and generally refers to an object present in reality, such as a building, a person, a mountain, and the like. "Concealed object" refers to a real object which cannot be recognized from the image captured from a real environment since the object is placed behind another visible object. The above terms may be modified according to the purpose and practice of a user or an operator, and thus the definition of the above terms should be made based on contents throughout the specification.

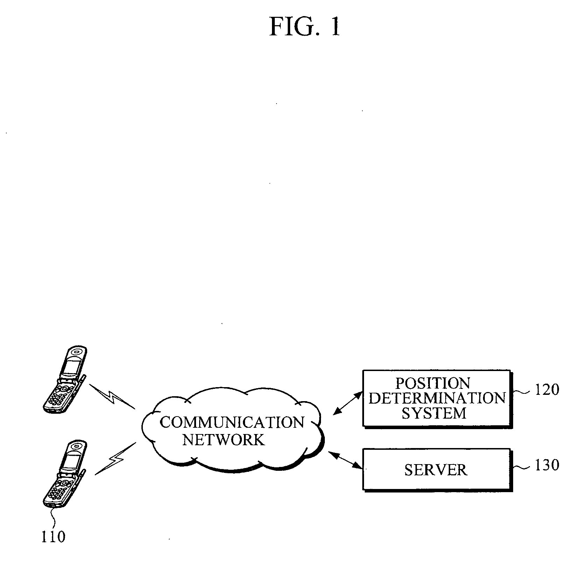

FIG. 1 is a diagram illustrating a communication system to provide augmented reality (AR) information according to an exemplary embodiment.

Referring to FIG. 1, the communication system may include at least one or more apparatuses 110 (hereinafter, referred to as "terminals") to provide AR information and a server 130 (hereinafter, referred to as "server") 130 to provide AR information for an AR service to the terminals 110, and the terminals 110 and the server 130 are connected to each other via a wired and/or wireless communication network. In addition, each terminal 110 may be provided with its position information from a position determination system 120 through the communication network.

The terminals 110 may be applicable to any types of apparatuses which can recognize an object included in an image and display AR information corresponding to the recognized object, and the apparatuses may include mobile communication terminals, such as personal digital assistants (PDAs), smart phones, and navigation terminal devices, and personal computers, such as desktop computers and laptop computers.

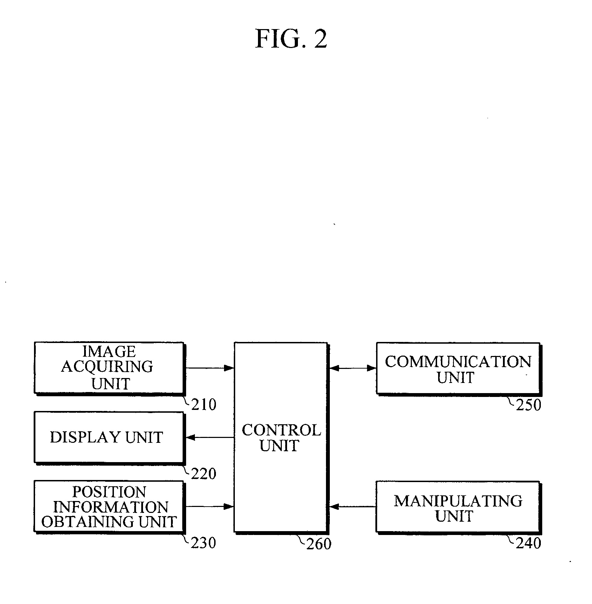

FIG. 2 is a diagram illustrating an apparatus or terminal to provide AR information according to an exemplary embodiment.

The terminal may include an image acquiring unit 210, a display unit 220, a position information obtaining unit 230, a control unit 260, a manipulating unit 240, and a communication unit 250.

The image acquiring unit 210 acquires an image by capturing a real environment image, and outputs the image to the control unit 260. The image acquiring unit 210 may be a camera or an image sensor. In addition, the image acquiring unit 210 may be a camera that is capable of zooming in/out an image or being rotated automatically or manually by the control of the control unit 260. However, aspects are not limited thereto such that the image acquiring unit 210 may acquire an image of a real environment from an outside source or from a memory. The display unit 220 outputs an image input from an external source, and for example, in FIG. 2, the display unit 220 may output at least one of the image obtained by the image acquiring unit 210, a focal point setting screen, concealed object information, user interface information, or AR information of an object of interest, and combinations thereof. The position information obtaining unit 230 may receive position information of the terminal 110 from the position determination system 120, and output the position information, and may include, for example, a global positioning system (GPS) receiver to receive a position information signal from a GPS satellite and/or a system to receive a position information signal(s) from a communication network.

The manipulating unit 240, which is a user interface, may receive information from a user, and may include a key input unit that creates key information upon pressing a key button, a touch sensor, a mouse, a touchscreen, and/or the like. In the example, the manipulating unit 240 may receive at least one of a concealed object information request signal, reference object selection information, and object of interest selection information. The communication unit 250 may process a signal received from the outside through the wired and/or wireless communication network and output the processed signal to the control unit 260, and may process an internal output signal received from the control unit 260 such that the signal can be transmitted to the outside through the wired and/or wireless communication network.

The control unit 260 may control the above elements to provide AR information of a concealed object, and may be a hardware processor or a software module to be executed on such a hardware processor.

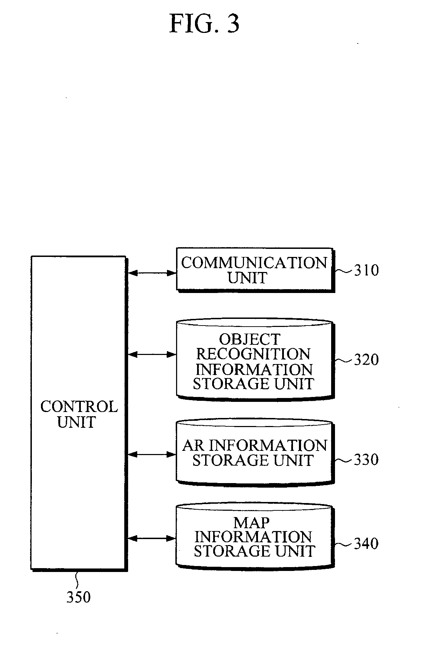

FIG. 3 is a diagram illustrating a server to provide AR information according to an exemplary embodiment.

The server may include a communication unit 310, an object recognition information storage unit 320, an AR information storage unit 330, a map information storage unit 340, and a control unit 350.

The communication unit 310 may process a signal received from the outside through a wired and/or wireless communication network and output the processed signal to the control unit 350, and may process an inner output signal received from the control unit 350 such that the signal can be transmitted to the outside through the wired and/or wireless communication network. The object recognition information storage unit 330 may store recognition information for recognizing objects, and, for example, may store properties, such as outlines and colors of the objects. Accordingly, the control unit 350 may identify an object by comparing properties contained in object recognition information received from the terminal and properties contained in the object recognition information stored in the object recognition storage unit 320.

The AR information storage unit 330 may store pieces of AR information that are related to an object. For example, if an object is a given tree, the AR information storage unit 330 may store a name of the tree, a habitat, ecological characteristics, etc. as tag images. The map information storage unit 340 may store map information. In response to receiving position information from a terminal, the control unit 350 may detect or determine map information corresponding to the received position information from the map information storage unit 340.

The control unit 350 may control the above described elements to provide AR information of a concealed object, and may be a hardware processor or a software module to be executed on such a hardware processor.

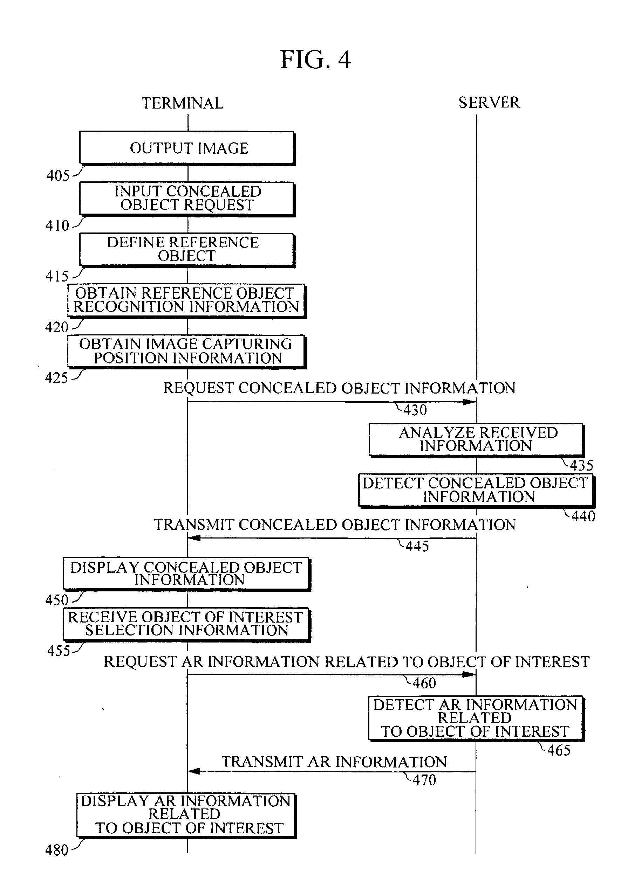

An example of a method for providing AR information of a concealed object by the system as described above will now be described with reference to FIGS. 4 to 8.

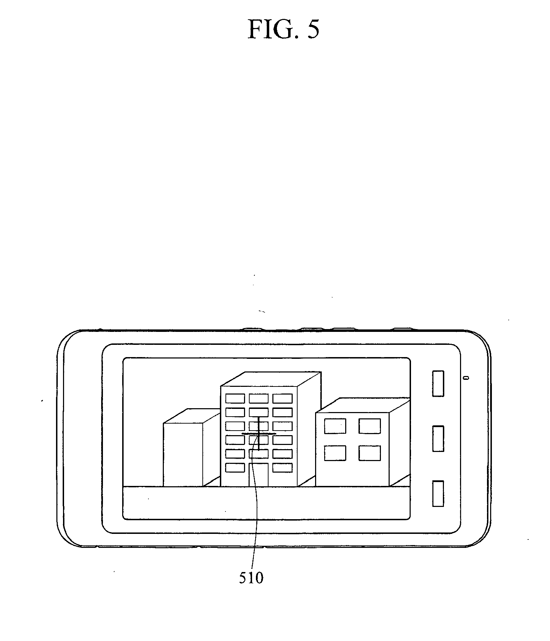

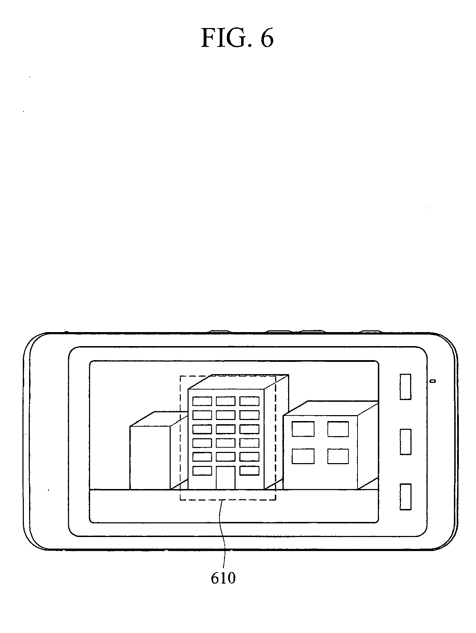

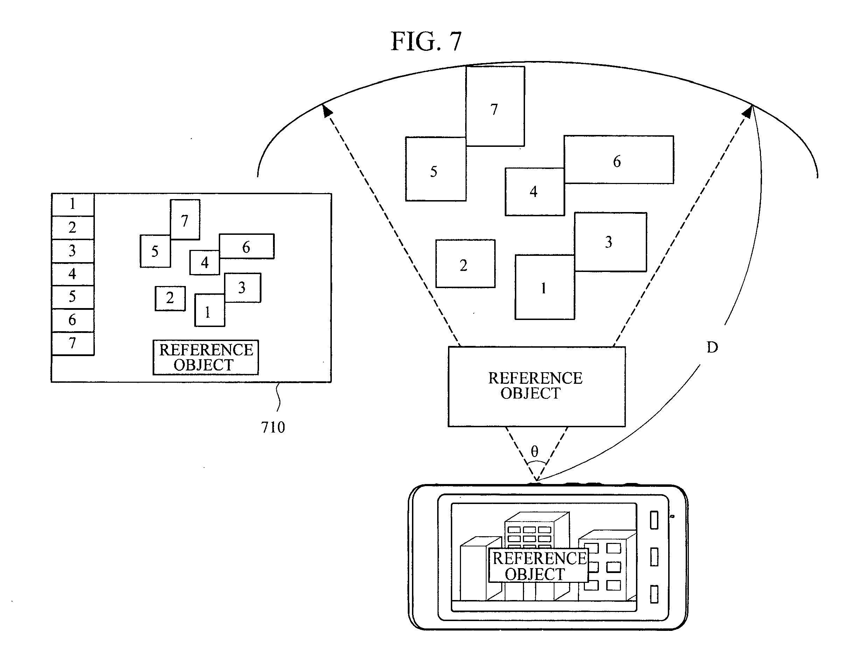

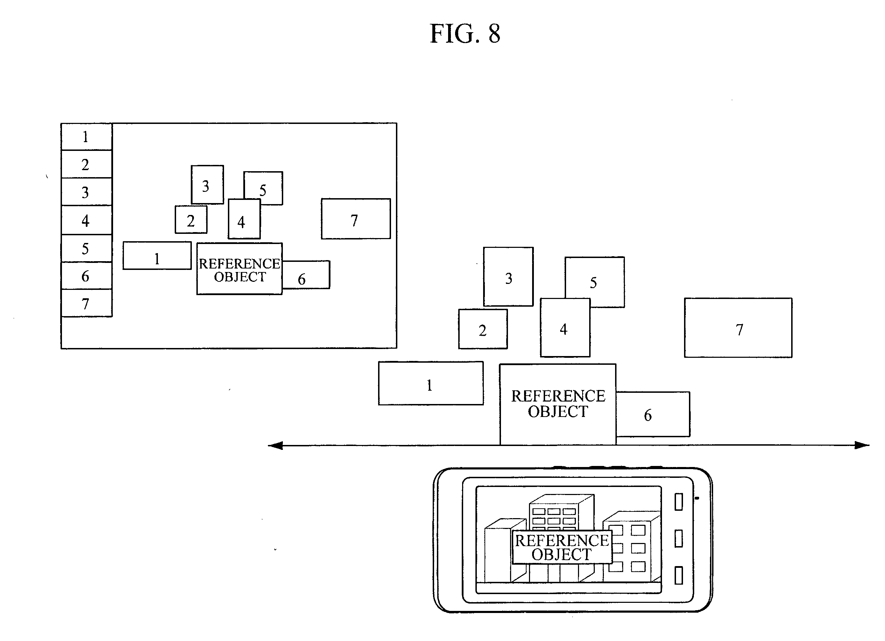

FIG. 4 is a flowchart for a method of providing AR information according to an exemplary embodiment, FIG. 5 is a diagram illustrating a focal point setting screen according to an exemplary embodiment, FIG. 6 is a diagram illustrating a focal point setting screen according to an exemplary embodiment, FIG. 7 is a diagram illustrating a user interface to provide concealed object information according to an exemplary embodiment, and FIG. 8 is a diagram illustrating a user interface to provide concealed object information according to an exemplary embodiment.

Referring to FIG. 4, at 405, the terminal drives the image acquiring unit 210 to acquire an image of the real environment, and outputs the acquired image to the display unit 220. The terminal may control the image acquiring unit 210 to acquire the image in response to an input from the manipulating unit 240; however, aspects are not limited thereto such that the image acquiring unit 210 may automatically acquire such image. At 410, the terminal receives an AR information request with respect to a concealed object that is not shown because, for example, another object in the image is in front of or conceals the object, and then, at 415, the terminal defines a reference object from among one or more visible objects included in the acquired image.

There may be various examples of how to define a reference object at 415.

For example, the terminal may select and define a reference object according to previously set criteria, and as an example, the most visible object among the visible objects may be set as the reference object.

For another example, the reference object may be set by selection information input from the user. A cross-shaped focal point 510 as shown in FIG. 5 or a rectangular focal area 610 as shown in the example illustrated in FIG. 6 may be display on a screen, and the user may apply focal point adjustment information in connection with a reference object selected by the user to the created focal point or area, and then select a visible object located or disposed at the focal point or area as the reference object according to the focal point adjustment information. For another example, the user may directly touch the screen to input reference object selection information.

At 420, the terminal obtains recognition information of the reference object. For example, property information (i.e., outline and/or color) of a real object, which may be an object of interest, is extracted from an image acquired from a camera as recognition information.

At 425, the terminal obtains position information about a position at which the acquired image is or was captured. If the image is obtained by the terminal in real-time, the terminal may obtain its position information from the position determination system. However, if the image is previously obtained or provided from an external source, the terminal may receive image capturing position information from the user or from data regarding or within the image. Here, operations 420 and 425 may be performed simultaneously, or the order of operations 420 and 425 may be rearranged.

At 430, the terminal issues a concealed object information request to the server. In this case, the terminal may transmit reference object recognition information and image capturing position information. In addition to the reference object recognition information and the image capturing position information, information about a range of the concealed object may be transmitted, and, for example, referring to FIG. 7, the range information may include a depth D from an image capturing position to the reference object along and/or about an image capturing direction of the terminal and an angle of view θ at the image capturing position. Although not illustrated, the range information of the concealed object may be previously defined or be input in real-time by the user. If the server has previously defined the range information, the range information may not be transmitted from the terminal.

In response to receiving the concealed object information request from the terminal, the server analyzes the received reference object recognition information and the image capturing position information at 435. More specifically, the server searches the map information storage unit 340 (see FIG. 3) to detect or determine a map corresponding to the received image capturing position information, and analyzes the reference object recognition information to determine the position of the reference object on the detected map. The server uses the determined reference object position and the image capturing position information to obtain information about an image capturing direction. For example, the image capturing direction may be a direction from the image capturing position to the reference object may be determined as the image capturing direction, and the image capturing direction may be determined from the reference object recognition information, the image capturing position information, and the like, and/or may be determined gyroscopically.

At 440, the server detects or determines information about concealed objects positioned behind the reference object along and/or about the direction from the image capturing position to the reference object, that is, the image capturing direction, according to the analysis result obtained at 435. The server may detect or determine information about concealed objects present within a range determined by the above described depth D and angle of view θ and the image capturing direction obtained at 435. For example, referring to FIG. 6, seven concealed objects may be determine.

The server transmits the determined information about concealed objects to the terminal at 445. The information about concealed objects may be displayed in or as a user interface 710 as shown in FIG. 7, which displays positions and, additionally, sizes of the concealed objects with respect to the reference object.

However, aspects are not limited thereto such that various modifications of the above user interface may be made, and for example, in order to identify the concealed objects, the user interface may assign identification numbers to the respective concealed objects as shown in FIG. 7, display the respective concealed objects with different colors, or allocate identifiers to the respective concealed objects.

There may be various methods of assigning the identification numbers. For example, as shown in FIG. 7, the identification numbers may be sequentially assigned to the concealed objects, starting from the concealed object closest to the reference object to the concealed object farthest from the reference position along and/or about the image capturing direction. For example, as shown in FIG. 8, the identification numbers may be assigned to the concealed objects in a clockwise direction.

The terminal outputs the concealed object information to the display unit 220 (see FIG. 2) at 445. For example, the concealed object information output to the display unit 220 may be displayed as the user interface 710 on the whole screen of the display unit 220 as shown in FIG. 7, may be displayed on a region of the screen which is displaying a preview image, or may be displayed in the form of a popup window. Additionally, the user interface 710 may be varied according to information input from the user.

At 455, object of interest selection information about an object of interest for which AR information is to be obtained from among the output concealed objects is received through the manipulating unit 240. The method of receiving the object of interest selection information may be varied in different embodiments. For example, the user may touch the screen to select an object of interest, or may directly input identification information of the object of interest, such as an identification number, an identifier, and identification color. In response to receiving the object of interest selection information from the user, the terminal transmits the received object of interest selection information to the server at 460. That is, the terminal determines identification information of the object of interest and transmits it to the server.

At 465, the server detects or determines AR information related to an object corresponding to the object of interest selection information transmitted from the terminal.

At 480, in response to receiving the AR information from the server, the terminal displays the received AR information combined with the corresponding object of interest. However, since the object of interest is a concealed object, the object of interest may be displayed overlaying on a preview image, or information about the object of interest may be displayed on a part of the preview image.

As described above, AR information can be provided with respect to a concealed object that is behind or concealed by other objects and thus cannot be recognized by a camera.

Although the examples above are described as being implemented in a system that is configured to include an AR information provision terminal apparatus and an AR information provision server which are connected to each other through a communication network, the terminal and server may be implemented as being integrated into a single apparatus.

It will be apparent to those skilled in the art that various modifications and variation can be made in the present invention without departing from the scope of the invention. Thus, it is intended that the present invention cover the modifications and variations of this invention provided they come within the scope of the appended claims.

An apparatus, system, and method for providing augmented reality (AR) information of a concealed object are disclosed. The method for providing AR information of a concealed object by a terminal connectable to a server via a wired and/or wireless communication network may include acquiring an image of a real environment; defining a reference object included in the acquired image; obtaining image capturing position information about a position of the image and reference object recognition information of the defined reference object; transmitting the obtained image capturing position information and the reference object recognition information to the server; receiving information about concealed objects from the server, the concealed objects being disposed behind the reference object along or about a direction from the image capturing position to the reference object; and outputting the received information about concealed objects.

## Claims

1. A method for providing augmented information (AR) of concealed objects using a terminal (110) connectable to a server (130) via a wired and/or wireless communication network, the method comprising on the side of the terminal (110):
acquiring (405) an image of a real environment through an image acquiring unit (210) of the terminal (110);
receiving reference object selection information from a user;
defining (415) a reference object included in the acquired image;
obtaining (425) image capturing position information about a position of the image and obtaining (420) reference object recognition information of the defined reference object;
receiving information about the concealed objects, the concealed objects being disposed behind the reference object about a direction from the image capturing position to the reference object; and
outputting the received information about the concealed objects on a display unit (220) of the terminal (110),
**characterized in that** the method further comprises: on the side of the terminal (110):
a1) defining the reference object from among a plurality of visible objects included in the acquired image based on said reference object selection information;
a2) obtaining the reference object recognition information by extracting property information in the form of outline and/or color information of the defined reference object from the acquired image, and;
a3) transmitting the obtained image capturing position information and the reference object recognition information to the server (130);
a4) receiving the information about the concealed objects at the terminal (110) from the server (130).

2. The method of claim 1, wherein the defining of the reference object comprises:
creating a focal point on a screen on which the image is output; and
defining an object located at the focal point as the reference object.

3. The method of claim 1 or 2, wherein the information about concealed objects is information of concealed objects which are present within a range defined based on the reference object,
wherein the range preferably is determined by a depth and an angle of view in the direction from the image capturing position to the reference object.

4. The method of one of claims 1 to 3, wherein the information about concealed objects is user interface information that includes positions of concealed objects with respect to the reference object,
wherein the concealed objects preferably are represented in the user interface information by different identification numbers or colors for individual concealed objects.

5. The method of one of claims 1 to 4, further comprising:
in response to receiving object of interest selection information about an object of interest selected from concealed objects, obtaining AR information corresponding to the object of interest; and
outputting the obtained AR information.

6. The method of one of the claims 1 to 5,
wherein the method comprises on the side of the server (130):
in response to receiving (430) a concealed object information request from one of the terminals, analyzing (435) property information of a reference object, as reference object recognition information, and image capturing position information received from the terminal (110);
determining (440) information about at least one or more concealed objects disposed behind a the reference object about a direction from an image capturing position to the reference object according to the analysis result; and
transmitting the determined information about the concealed objects to the terminal (110).

7. The method of claim 6, wherein the analyzing (435) of the reference object recognition information and the image capturing position information comprises:
determining a map corresponding to the image capturing position information,
analyzing the reference object recognition information to determine a position of the reference object on the determined map, and
determining an image capturing direction according to the determined reference object position and the image capturing position.

8. The method of claim 6 or 7, wherein the determining (440) of the information comprises determining concealed objects disposed within a range determined according to a depth and an angle of view in the obtained image capturing direction.

9. A terminal (110) to provide augmented reality (AR) information of concealed objects, the terminal (110) comprising:
an image acquiring unit (210) adapted to acquire an image of a real environment;
a display unit (220) adapted to output the image and information about the concealed objects;
a communication unit adapted to access a server (130) and process a signal communicated with the server (130); and
a control unit (260) adapted:
to receive reference object selection information from a user,
to define a reference object included in the acquired image,
to obtain image capturing position information about a position of the image,
to obtain reference object recognition information of the defined reference object,
to receive information about the concealed objects present about a direction from the image capturing position to the reference object, and
to output the received information about concealed objects to the display unit (220),
**characterized in that**
the control unit (260) is further adapted to:
define the reference object from among a plurality of visible objects included in the acquired image based on said reference object selection information;
obtain the reference object recognition information by extracting property information in the form of outline and/or color information of the defined reference object from the acquired image, and
transmit the obtained image capturing position information and reference object recognition information to the server (130) through the communication unit (250), and
to receive from the server (130) the information about the concealed objects.

10. The terminal (110) of claim 9, further comprising:
a manipulating unit (240) to receive user information,
wherein the control unit (260) receives reference object selection information from via the manipulating unit (240) to define the reference object,
wherein preferably the control unit (260) displays a focal point (510) on the image output to the display unit (220) and defines an object at the focal point (510) as the reference object according to focal point adjustment information input from the manipulating unit (240).

11. The terminal (110) of claim 9 or 10, wherein the information about concealed objects is user interface information that includes positions of concealed objects with respect to the reference object,
wherein preferably the concealed objects are represented in the user interface information by different identification numbers or colors for individual concealed objects.

12. The terminal (110) of claim 10 or 11, wherein the control unit (260), in response to receiving selection information about an object of interest selected from concealed objects, obtains AR information corresponding to the selected object of interest from the server (130), and outputs the obtained AR information to the display unit.

13. A communication system comprising at least one terminal (110) according to one of the claims 9 to 12, and comprising a server (130) to provide augmented reality (AR) information of concealed objects, the server (130) comprising:
a communication unit (310) adapted to process a signal communicated with at least one or more terminals (110) via a wired and/or wireless communication network;
a control unit (350) adapted to:
analyze in response to receiving concealed object information request signal from the terminal (110) through the communication unit (310), reference object recognition information, which are property information in the form of outline and/or color information, of the reference object, and image capturing position information received from the terminal (110),
determine information about at least one or more concealed objects that are disposed behind the reference object about a direction from an image capturing position to the reference object according to the analysis result, and
transmit the determined information about concealed objects to the terminal (110).

14. The communication system of claim 13, wherein the server (130) further comprising:
a map information storage unit (340) to store map information,
wherein the control unit (350) is adapted to determines a map from the map information storage unit (340) corresponding to the received image capturing position information, to analyzes the reference object recognition information to determine a position of the reference object on the determined map, and to obtains an image capturing direction according to the determined reference object position and the image capturing position information.

15. The communication system of claim 14, wherein the control unit (350) is adapted to determine concealed objects disposed within a range determined according to a depth (D) and an angle of view (θ) in the obtained image capturing direction.

## Patentansprüche

1. Verfahren zum Bereitstellen von erweiterten Informationen (AR) verborgener Objekte unter Verwendung eines mit einem Server (130) über ein kabelgebundenes oder/und kabelloses Kommunikationsnetzwerk verbindbaren Endgeräts (110), wobei das Verfahren auf Seiten des Endgeräts (110) umfasst:
Erfassen (405) eines Bildes einer realen Umgebung mittels einer Bild-Erfassungseinheit (210) des Endgeräts (110);
Empfangen von Referenzobjekt-Auswahlinformationen von einem Benutzer;
Definieren (415) eines Referenzobjekts, welches in dem empfangenen Bild enthalten ist;
Erhalten (425) von Bildaufnahmepositions-Informationen über eine Position des Bildes und Erhalten (420) von Referenzobjekt-Erkennungsinformationen des definierten Referenzobjekts;
Empfangen von Informationen über die verborgenen Objekte, wobei die verborgenen Objekte hinter dem Referenzobjekt angeordnet sind, in einer Richtung von der Bildaufnahmeposition aus in Richtung des Referenzobjekts betrachtet; und
Ausgeben der empfangenen Informationen über die verborgenen Objekte auf einer Anzeigeeinheit (220) des Endgeräts (110),
**dadurch gekennzeichnet, dass** das Verfahren ferner umfasst: auf Seiten des Endgeräts (110):
a1) Definieren des Referenzobjekts aus einer Mehrzahl von sichtbaren Objekten, welche in dem erfassten Bild enthalten sind, auf Grundlage der Referenzobjekt-Auswahlinformationen;
a2) Erhalten der Referenzobjekt-Erkennungsinformationen durch Entnehmen von Eigenschafts-Informationen in Form von Umriss- oder/und Farb-Informationen des definierten Referenzobjekts aus dem erfassten Bild; und
a3) Übertragen der erhaltenen Bildaufnahmepositions-Informationen und der Referenzobjekt-Erkennungsinformationen an den Server (130);
a4) Empfangen der Informationen über die verborgenen Objekte an dem Endgerät (110) von dem Server (130).

2. Verfahren nach Anspruch 1, wobei das Definieren des Referenzobjekts umfasst:
Erzeugen eines Fokuspunkts auf einem Bildschirm, auf welchem das Bild ausgegeben wird; und
Definieren eines Objekts, welches an dem Fokuspunkt angeordnet ist, als das Referenzobjekt.

3. Verfahren nach Anspruch 1 oder 2, wobei die Informationen über verborgene Objekte Informationen von verborgenen Objekten sind, welche innerhalb eines Bereichs vorliegen, welcher auf Grundlage des Referenzobjekts definiert ist,
wobei der Bereich vorzugsweise durch eine Blicktiefe und einen Blickwinkel in der Richtung von der Bildaufnahmeposition aus in Richtung des Referenzobjekts betrachtet, bestimmt wird.

4. Verfahren nach einem der Ansprüche 1 bis 3, wobei die Informationen über verborgene Objekte Benutzeroberflächen-Informationen sind, welche Positionen von verborgenen Objekten bezüglich des Referenzobjekts umfassen,
wobei die verborgenen Objekte vorzugsweise in den Benutzeroberflächen-Informationen durch verschiedene ldentifikationsnummern oder -farben für einzelne verborgene Objekte repräsentiert werden.

5. Verfahren nach einem der Ansprüche 1 bis 4, ferner umfassend:
als Reaktion auf ein Erhalten von Interessenauswahl-Informationen über ein interessierendes Objekt, welches aus verborgenen Objekten ausgewählt wird, Erhalten von AR-Informationen entsprechend dem interessierenden Objekt; und
Ausgeben der erhaltenen AR-Informationen.

6. Verfahren nach einem der Ansprüche 1 bis 5,
wobei das Verfahren auf Seiten des Servers (130) umfasst:
als Reaktion auf ein Empfangen (430) einer Anfrage von einem der Endgeräte nach Informationen über ein verborgenes Objekt, Analysieren (435) von Eigenschafts-Informationen eines Referenzobjekts als Referenzobjekt-Erkennungsinformationen und von dem Endgerät (110) erhaltenen Bildaufnahmepositions-Informationen;
Bestimmen (440) von Informationen über wenigstens eines oder mehrere verborgene Objekte, welche hinter dem Referenzobjekt aus einer Richtung von einer Bildaufnahmeposition zu dem Referenzobjekt aus gesehen angeordnet sind, entsprechend dem Analyseergebnis; und
Übertragen der bestimmten Informationen über die verborgenen Objekte an das Endgerät (110).

7. Verfahren nach Anspruch 6, wobei das Analysieren (435) der Referenzobjekt-Erkennungsinformationen und der Bildaufnahmepositions-Informationen umfasst:
Bestimmen einer Karte entsprechend der Bildaufnahmepositions-Informationen,
Analysieren der Referenzobjekt-Erkennungsinformationen zum Bestimmen einer Position des Referenzobjekts auf der bestimmten Karte, und
Bestimmen einer Bildaufnahmerichtung entsprechend der bestimmten Referenzobjektposition und der Bildaufnahmeposition.

8. Verfahren nach Anspruch 6 oder 7, wobei das Bestimmen (440) der Informationen ein Bestimmen verborgener Objekte umfasst, welche innerhalb eines Bereichs angeordnet sind, welcher entsprechend einer Blicktiefe und eines Blickwinkels in der erhaltenen Bildaufnahmerichtung bestimmt worden ist.

9. Endgerät (110) zum Bereitstellen erweiterter Informationen (AR) verborgener Objekte, wobei das Endgerät (110) umfasst:
eine Bild-Erfassungseinheit (210), welche dazu eingerichtet ist, ein Bild einer realen Umgebung zu erfassen;
eine Anzeigeeinheit (220), welche dazu eingerichtet ist, das Bild und Informationen über die verborgenen Objekte auszugeben;
eine Kommunikationseinheit, welche dazu eingerichtet ist, auf einen Server (130) zuzugreifen und ein mit dem Server (130) kommuniziertes Signal zu prozessieren; und
eine Steuer-/Regeleinheit (260), welche dazu eingerichtet ist:
Referenzobjekt-Auswahlinformationen von einem Benutzer zu erhalten, ein in dem erhaltenen Bild enthaltenes Referenzobjekt zu definieren, Bildaufnahmepositions-Informationen über eine Position des Bildes zu erhalten,
Referenzobjekt-Erkennungsinformationen des definierten Referenzobjekts zu erhalten,
Informationen über die verborgenen Objekte zu empfangen, welche in einer Richtung von der Bildaufnahmeposition in Richtung des Referenzobjekts aus gesehen vorliegen, und
die empfangenen Informationen über verborgene Objekte auf der Anzeigeeinheit (220) auszugeben,
**dadurch gekennzeichnet, dass**
die Steuer-/Regeleinheit (260) ferner dazu eingerichtet ist:
das Referenzobjekt aus einer Mehrzahl von sichtbaren Objekten zu definieren, welche in dem erhaltenen Bild enthalten sind, auf Grundlage der Referenzobjekt-Auswahlinformationen;
die Referenzobjekt-Erkennungsinformationen durch Entnehmen von Eigenschafts-Informationen in Form von Umriss- oder/und Farb-Informationen des definierten Referenzobjekts aus dem empfangenen Bild zu extrahieren, und
die erhaltenen Bildaufnahmepositions-Informationen und Referenzobjekt-Erkennungsinformationen an den Server (130) mittels der Kommunikationseinheit (250) zu übertragen, und
von dem Server (130) die Informationen über die verborgenen Objekte zu empfangen.

10. Endgerät (110) nach Anspruch 9, ferner umfassend:
eine Bedieneinheit (240) zum Empfangen von Benutzerinformationen,
wobei die Steuer-/Regeleinheit (260) Referenzobjekt-Auswahlinformationen von mittels der Bedieneinheit (240) empfängt, um das Referenzobjekt zu definieren,
wobei vorzugsweise die Steuer-/Regeleinheit (260) einen Fokuspunkt (510) auf der Bildausgabe der Anzeigeeinheit (220) anzeigt und ein Objekt an dem Fokuspunkt (510) als das Referenzobjekt entsprechend von der Bedieneinheit (240) eingegebenen Fokuspunkt-Anpassungsinformationen definiert.

11. Endgerät (110) nach Anspruch 9 oder 10, wobei die Informationen über verborgene Objekte Benutzeroberflächen-Informationen sind, welche Positionen verborgener Objekte bezüglich des Referenzobjekts umfassen,
wobei vorzugsweise die verborgenen Objekte in den Benutzeroberflächen-Informationen durch verschiedene Identifikationsnummern oder -farben für einzelne verborgene Objekte repräsentiert werden.

12. Endgerät (110) nach Anspruch 10 oder 11, wobei die Steuer-/Regeleinheit (260) als Reaktion auf ein Empfangen von Auswahlinformationen über ein aus den verborgenen Objekten ausgewähltes interessierendes Objekt AR-Informationen entsprechend dem ausgewählten interessierenden Objekt von dem Server (130) erhält und die erhaltenen AR-Informationen an die Anzeigeeinheit ausgibt.

13. Kommunikationssystem umfassend wenigstens ein Endgerät (110) nach einem der Ansprüche 9 bis 12 und umfassend einen Server (130) zum Bereitstellen von erweiterten Informationen (AR) über verborgene Objekte, wobei der Server (130) umfasst:
eine Kommunikationseinheit (310), welche dazu eingerichtet ist, ein mit wenigstens einem oder mehreren Endgeräten (110) über ein kabelgebundenes oder/und kabelloses Kommunikationsnetzwerk kommuniziertes Signal zu prozessieren;
eine Steuer-/Regeleinheit (350), welche dazu eingerichtet ist:
als Reaktion auf ein Empfangen eines Anfragesignals über ein verborgenes Objekt von dem Endgerät (110) durch die Kommunikationseinheit (310) Referenzobjekt-Erkennungsinformationen, welche Eigenschafts-Informationen in Form von Umriss- oder/und Farb-Informationen des Referenzobjekts sind, und von dem Endgerät (110) empfangene Bildaufnahmepositions-Informationen zu analysieren,
Informationen über wenigstens eines oder mehrere verborgene Objekte zu bestimmen, welche hinter dem Referenzobjekt in einer Richtung von einer Bildaufnahmeposition aus in Richtung des Referenzobjekts gesehen entsprechend des Analyseergebnisses zu bestimmen, und
die bestimmten Informationen über verborgene Objekte an das Endgerät (110) zu übertragen.

14. Kommunikationssystem nach Anspruch 13, wobei der Server (130) ferner umfasst:
eine Karteninformation-Speichereinheit (340) zum Speichern von Karteninformationen,
wobei die Steuer-/Regeleinheit (350) dazu eingerichtet ist, eine Karte aus der Karteninformation-Speichereinheit (340) entsprechend den empfangenen Bildaufnahmepositions-Informationen zu bestimmen, die Referenzobjekt-Erkennungsinformationen zu analysieren, um eine Position des Referenzobjekts auf der bestimmten Karte zu analysieren, und eine Bildaufnahmerichtung entsprechend der bestimmten Referenzobjektposition und der Bildaufnahmepositions-Informationen zu erhalten.

15. Kommunikationssystem nach Anspruch 14, wobei die Steuer-/Regeleinheit (350) dazu eingerichtet ist, verborgene Objekte zu bestimmen, welche innerhalb eines Bereichs angeordnet sind, welcher entsprechend einer Blicktiefe (D) und eines Blickwinkels (θ) in der erhaltenen Bildaufnahmerichtung bestimmt worden ist.

## Revendications

1. Un procédé de fourniture d'informations à réalité augmentée (AR) d'objets masqués en utilisant un terminal (110) qui peut être raccordé à un serveur (130) par l'intermédiaire d'un réseau de communication câblé et/ou sans fil, le procédé comprenant du côté du terminal (110) :
l'acquisition (405) d'une image d'un environnement réel par l'intermédiaire d'une unité d'acquisition d'images (210) du terminal (110) ;
la réception d'informations de sélection d'un objet de référence provenant d'un utilisateur ;
la définition (415) d'un objet de référence inclus dans l'image acquise ;
l'obtention (425) d'informations de position de capture d'image à propos d'une position de l'image et l'obtention (420) d'informations de reconnaissance d'un objet de référence de l'objet de référence défini ;
la réception d'informations à propos des objets masqués, les objets masqués étant disposés derrière l'objet de référence, autour d'une direction de la position de capture d'image par rapport à l'objet de référence ; et
la sortie des informations reçues à propos des objets masqués sur une unité d'affichage (220) du terminal (110),
**caractérisé en ce que** le procédé comprend par ailleurs du côté du terminal (110) :
a1) la définition de l'objet de référence à partir d'une pluralité d'objets visibles inclus dans l'image acquise sur la base desdites informations de sélection d'un objet de référence ;
a2) l'obtention des informations de reconnaissance d'un objet de référence par extraction des informations de propriété sous la forme des informations du contour et/ou de couleur de l'objet de référence défini à partir de l'image acquise, et ;
a3) la transmission des informations de position de capture d'image obtenues et des informations de reconnaissance d'un objet de référence au serveur (130) ;
a4) la réception des informations à propos des objets masqués à hauteur du terminal (110) du serveur (130).

2. Le procédé selon la revendication 1, dans lequel la définition de l'objet de référence comprend :
la création d'un point focal sur un écran sur lequel l'image est sortie ; et la définition d'un objet situé à hauteur du point focal comme l'objet de référence.

3. Le procédé selon l'une des revendications 1 ou 2, dans lequel les informations à propos des objets masqués sont des informations d'objets masqués qui sont présents dans une gamme définie sur la base de l'objet de référence,
dans lequel la gamme est de préférence déterminée par une profondeur et un angle de vue dans la direction de la position de capture d'image par rapport à l'objet de référence.

4. Le procédé selon l'une des revendications 1 à 3 dans lequel les informations à propos des objets masqués sont des informations d'interface utilisateur qui comprennent des positions des objets masqués par rapport à l'objet de référence,
dans lequel les objets masqués sont de préférence représentés dans les informations d'interface utilisateur par différents nombres ou couleurs d'identification pour des objets masqués individuels.

5. Le procédé selon l'une des revendications 1 à 4, comprenant par ailleurs :
en réponse à la réception des informations de sélection d'un objet d'intérêt à propos d'un objet d'intérêt choisi à partir des objets masqués, l'obtention d'informations AR correspondant à l'objet d'intérêt ; et
la sortie des informations AR obtenues.

6. Le procédé selon l'une des revendications 1 à 5,
dans lequel le procédé comprend du côté du serveur (130) :
en réponse à la réception (430) d'une demande d'information sur un objet masqué d'un des terminaux, l'analyse (435) des informations de propriété d'un objet de référence en tant qu'information de reconnaissance d'un objet de référence et des informations de position de capture d'image reçues à partir du terminal (110) ;
la détermination (440) d'informations à propos d'au moins un ou plusieurs objets masqués disposés derrière l'objet de référence autour d'une direction à partir d'une position de capture d'image par rapport à l'objet de référence selon le résultat de l'analyse ; et
la transmission des informations déterminées à propos des objets masqués au terminal (110).

7. Le procédé selon la revendication 6, dans lequel l'analyse (435) des informations de reconnaissance d'un objet de référence et les informations de position de capture d'image comprennent :
la détermination d'une carte correspondant aux informations de position de capture d'image,
l'analyse des informations de reconnaissance d'un objet de référence pour déterminer une position de l'objet de référence sur la carte déterminée, et
la détermination d'une direction de capture d'image selon la position de l'objet de référence déterminée et la position de capture d'image.

8. Le procédé selon l'une des revendications 6 ou 7, dans lequel la détermination (440) des informations comprend la détermination des objets masqués disposés dans une gamme déterminée selon une profondeur et un angle de vue dans la direction de capture d'image obtenue.

9. Un terminal (110) pour fournir des informations à réalité augmentée (AR) d'objets masqués, le terminal (110) comprenant :
une unité d'acquisition d'image (210) destinée à acquérir une image d'un environnement réel ;
une unité d'affichage (220) destinée à sortir l'image et les informations à propos des objets masqués ;
une unité de communication destinée à accéder à un serveur (130) et à traiter un signal communiqué avec le serveur (130) ; et
une unité de commande (260) destinée à :
recevoir des informations de sélection d'un objet de référence à partir d'un utilisateur ;
définir un objet de référence inclus dans l'image acquise ;
obtenir des informations de position de capture d'image à propos d'une position de l'image ;
obtenir des informations de reconnaissance d'un objet de référence de l'objet de référence défini;
recevoir les informations à propos des objets masqués présents autour d'une direction de la position de capture d'image par rapport à l'objet de référence, et
sortir les informations reçues à propos des objets masqués sur l'unité d'affichage (220),
**caractérisé en ce que**
l'unité de commande (260) est par ailleurs destinée à :
définir l'objet de référence à partir d'une pluralité d'objets visibles inclus dans l'image acquise sur la base desdites informations de sélection d'un objet de référence ;
obtenir les informations de reconnaissance d'un objet de référence par extraction des informations de propriété sous la forme d'informations de contours et/ou de couleur de l'objet de référence défini à partir de l'image acquise, et
transmettre les informations de position de capture d'image et les informations de reconnaissance d'un objet de référence obtenues au serveur (130) par l'intermédiaire de l'unité de communication (250), et
recevoir du serveur (130) les informations à propos des objets masqués.

10. Le terminal (110) selon la revendication 9, comprenant par ailleurs :
une unité de manipulation (240) pour recevoir les informations de l'utilisateur,
dans lequel l'unité de commande (260) reçoit des informations de sélection d'un objet de référence par l'intermédiaire de l'unité de manipulation (240) pour définir l'objet de référence,
dans lequel l'unité de commande (260) affiche de préférence un point focal (510) sur l'image sortie vers l'unité d'affichage (220) et définit un objet à hauteur du point focal (510) comme l'objet de référence selon l'entrée d'informations d'ajustement du point focal à partir de l'unité de manipulation (240).

11. Le terminal (110) selon l'une des revendications 9 ou 10, dans lequel les informations à propos des objets masqués sont des informations d'interface utilisateur qui comprennent des positions d'objets masqués par rapport à l'objet de référence,
dans lequel les objets masqués sont de préférence représentés dans les informations de l'interface utilisateur par différents nombres ou couleurs d'identification pour des objets masqués individuels.

12. Le terminal (110) selon l'une des revendications 10 ou 11, dans lequel l'unité de commande (260), en réponse à la réception d'informations de sélection à propos d'un objet d'intérêt choisi parmi les objets masqués, obtient des informations AR correspondant à l'objet d'intérêt choisi à partir du serveur (130) et sort les informations AR obtenues vers l'unité d'affichage.

13. Un système de communication comprenant au moins un terminal (110) selon l'une des revendications 9 à 12 et comprenant un serveur (130) pour fournir des informations de réalité augmentée (AR) d'objets masqués, le serveur (130) comprenant :
une unité de communication (310) destinée à traiter un signal communiqué avec au moins un ou plusieurs terminaux (110) par l'intermédiaire d'un réseau de communication câblé et/ou sans fil ;
une unité de commande (350) destinée à :
analyser, en réponse à la réception d'un signal de demande d'informations d'un objet masqué à partir du terminal (110) par l'intermédiaire de l'unité de communication (310),
des informations de reconnaissance d'un objet de référence qui sont des informations de propriété sous la forme d'informations de contour et/ou de couleur de l'objet de référence et les informations de position de capture d'image reçues à partir du terminal (110),
déterminer les informations à propos d'au moins un ou plusieurs objets masqués qui sont disposés derrière l'objet de référence autour d'une direction à partir d'une position de capture d'image par rapport à l'objet de référence selon le résultat de l'analyse, et
transmettre les informations déterminées à propos d'objets masqués au terminal (110).

14. Le système de communication selon la revendication 13 dans lequel le serveur (130) comprend par ailleurs :
une unité de stockage d'informations sur carte (340) pour stocker des informations sur carte,
dans lequel l'unité de commande (350) est destinée à déterminer une carte à partir de l'unité de stockage des informations sur carte (340) correspondant aux informations de position de capture d'image reçues, à analyser les informations de reconnaissance d'un objet de référence pour déterminer une position de l'objet de référence sur la carte déterminée et obtenir une direction de capture d'image selon la position de l'objet de référence déterminé et les informations de position de capture d'image.

15. Le système de communication selon la revendication 14, dans lequel l'unité de commande (350) est destinée à déterminer les objets masqués disposés dans une gamme déterminée selon une profondeur (D) et un angle de vue (θ) dans la direction de capture d'image obtenue.
